# EUROPÄISCHE PATENTSCHRIFT

(11) **EP 2 212 053 B1**
(45) Veröffentlichungstag und Bekanntmachung des Hinweises auf die Patenterteilung: **16.03.2016**
(21) Anmeldenummer: 08801336.2
(22) Anmeldetag: 16.09.2008
(51) Int. Cl.: B23K 26/40, B23K 26/38

(54) **VERFAHREN ZUM HERSTELLEN VON SCHNEIDRÄDCHEN**
METHOD FOR THE PRODUCTION OF SMALL CUTTING WHEELS
PROCÉDÉ DE RÉALISATION DE ROULETTES DE COUPE

(30) Priorität: 22.09.2007 DE 102007045383
(43) Veröffentlichungstag der Anmeldung: 04.08.2010
(73) Patentinhaber: Bohle AG, 42781 Haan (DE)
(72) Erfinder: OSTENDARP, Heinrich, 42781 Haan (DE)
(74) Vertreter: Lippert, Stachow & Partner
(86) Internationale Anmeldenummer: PCT/DE2008/001544
(87) Internationale Veröffentlichungsnummer: WO 2009/036743

(56) Entgegenhaltungen:
- EP-A- 1 779 988
- WO-A-2006/082899
- WO-A-2008/087612
- JP-A- 2003 062 683
- JP-A- 2006 273 711
- JP-A- 2007 031 200
- JP-A- 2007 152 936

## Beschreibung

Die Erfindung betrifft ein Verfahren zum Herstellen von Schneidrädchen zum Erzeugen von geritzten Sollbruchlinien, wobei das Rädchen eine Drehachse und eine einen Außenumfang des Rädchens definierende radiale Umfangslinie aufweist, die zumindest teilweise eine Schneidkante mit einer Zahnstruktur mit von einander beabstandeten und durch Zahnzwischenräume getrennten Zähnen aufweist, wobei mittels eines Laserstrahls durch teilweises Abtragen des Umfangsbereichs des Rädchens im Bereich der radial äußeren Umfangslinie und der seitlich angrenzenden Oberflächenbereiche des Rädchens die Zahnstruktur ausgebildet wird.

Schneidrädchen sind vielfältig bekannt, die beispielsweise zum Ritzen von zum Teil sehr unterschiedlichen Glaskörpern wie z.B. Glasplatten, Hohlkörpern mit auch zum Teil sehr unterschiedlichen Eigenschaften wie der jeweiligen Glasart, der Materialstärke usw. eingesetzt werden können. Weiterhin bestehen erhebliche Anforderungen an die Qualität der durch die geritzte Sollbruchlinie erzeugten Glastrennflächen. Dies kann in gewissen Grenzen durch die verwendeten Schneidrädchen gesteuert werden, da die Kanten des Glaskörpers entlang der Sollbruchlinie in Abhängigkeit von dem verwendeten Rädchen mehr oder weniger stark absplittern. Insbesondere im Hinblick auf sehr dünne Glasplatten, wie sie beispielsweise für Displays oder andere elektronische Geräte oder Anwendungen eingesetzt werden, sind besonders hohe qualitative Anforderungen an die stirnseitige Trennfläche der Glasplatte zu stellen. Hierbei ist es zumeist erforderlich, durch den Ritzvorgang einen Tiefenriss zu erzeugen, der sich vorzugsweise über die gesamte Stärke der Glasplatte erstreckt, so dass Ausschuss bei der Separierung der einzelnen Glasplattenstücke weitestgehend vermieden werden kann. Andererseits ist es von wesentlicher Bedeutung, eine optimale Kantenqualität zu erzielen. So werden aufgrund des Ritzvorganges Materialspannungen in die Glasplatte eingebracht, welche zu einem oberflächlichen Absplittern entlang der Ritzlinie führen. Dies ist jedoch ebenfalls unerwünscht und kann zu erhöhtem Ausschuss führen. Zwar können derartige Absplitterungen dadurch vermindert werden, dass die Glasschneidrädchen mit geringerer Kraft gegen die Glasplatte angedrückt werden, dies führt dann jedoch zu einer geringeren Tiefe des Risses, wodurch das Separieren der Glasplattenteile erschwert oder der Ausschuss wesentlich erhöht ist.

Aus der EP 1 666 426 A1 sind Schneidrädchen zur Erzeugung von Tiefenrisse, die somit zur Herstellung von Flachdisplays wie z.B. für Flachbildschirme prinzipiell geeignet sind, sowie ein Herstellungsverfahren für diese bekannt. Die durch die zusammenlaufenden geneigten Seitenflächen des Rädchens gebildete Rippe weist hier alternierende Vorsprünge und Vertiefungen auf, wobei sich die Vertiefungen radial einwärts der äußersten Umfangslinie des Rädchens erstrecken. Diese Vertiefungen der Rippe sind als sich senkrecht zu der Hauptmittelebene der Rädchen erstreckende Nuten ausgeführt. Die Verzahnung wird mittels einer senkrecht zu der Hauptebene des Rädchens rotierenden Schleifscheibe oder mittels elektrischer Entladungen erzeugt.

An heutige Schneidrädchen sind jedoch auch sehr hohe Anforderungen an deren Lebensdauer zu stellen, wobei die Rädchen über deren Lebensdauer ein möglichst gleichbleibendes Ergebnis bei der Trennung der Glaskörper erzielen sollen, insbesondere auch hinsichtlich der Trennflächen und Bruchkanten. Andererseits sind die Schneidrädchen aufgrund der besonderen Einsatzbedingungen einer Abnutzung unterlegen, die zu einer Verbreiterung der Ritzlinien führt, wodurch verstärkt Absplitterungen im Bereich der Bruchkanten auftreten. Gegen Ende der Lebensdauer können die Schneidzähne sogar zunehmend ausbrechen, wodurch die Rädchen nicht mehr nutzbar sind. Die Abnutzung ist unter Berücksichtigung der an sich stabilen Grobverzahnung auch relativ stark, da zur Erzeugung der Tiefenrisse relativ hohe Kräfte auf die zu ritzende Oberfläche auszuüben sind, so dass die Rädchen relativ stark in den Glaskörper eindringen können. Mit der Abnutzung verschlechtert sich jedoch auch die Qualität der Trennflächen.

Zum Separieren von Glasplattenteilen für Flachdisplays wurden daher teilweise Laserstrahlschneidtechniken eingesetzt, die jedoch einen hohen apparativen Aufwand bedingen. Zudem ist die Produktivität derartiger Laserstrahlschneidverfahren begrenzt.

Weiterhin ist es bekannt, die Umfangsbereiche des Rädchens mittels abrasiver Schleifverfahren zu bearbeiten, durch derartige Verfahren kann jedoch nicht die gewünschte Grobverzahnung hergestellt werden. Weiterhin wird auch bei derartigen Rädchen ein Ausbrechen der Mikrozähne beobachtet.

Die JP 2007 031200 A, die z.B. die Basis für den Oberbegriff des Anspruchs 1 bildet, beschreibt ein Diamantschneidrädchen, welches dadurch hergestellt ist, dass an dem V-förmigen Rücken des Rädchens durch einen Laserstrahl eine Kante ausgebildet wird, indem der Laserstrahl in einer Richtung abgestrahlt wird, welcher die Umfangsrichtung einer den V-förmigen Rücken des Schneidrädchens bildenden Seitenfläche schneidet. Durch die Laserbestrahlung werden Rillen in das Diamantmaterial eingebracht.

Die JP 2007 152936 A beschreibt ein Schneidrädchen, wobei eine Vielzahl von länglichen Nuten in die geneigten Seitenbereiche des Rädchens mittels eines Laserstrahls eingebracht werden und diese angeschliffen wird.

Die WO 2006/082899 A beschreibt ein Verfahren zur Herstellung von Schneidrädchen aus gesintertem Diamant, wobei ein Laserstrahl seitlich auf das Rädchen gerichtet wird, um den Außenumfang des Rädchens zu bearbeiten, und wobei der Laserstrahl relativ zu dem Rädchen bewegt wird, um kontinuierlich um die Umfangsrichtung feine Nuten mit sich radial erstreckenden Nutöffnungen zu bilden.

Die EP 1 779 988 A beschreibt ein Verfahren zur Herstellung von Schneidrädchen, wobei Nuten in dem Rücken im Bereich der Umfangslinie des Rädchens eingearbeitet werden und wobei die Nuten mit einem Pitchabstand von mehr als 200µm angeordnet sind. Die Nuten können durch mechanisches Eingravieren oder durch herkömmliche Polierverfahren, Entladungsverfahren oder Laserbearbeitung erzeugt werden.

Die JP 2006 273711 A beschreibt ein Verfahren zum Trennen von laminierten Substraten mittels Schneidrädchen.

Die JP 2003 062683 A beschreibt ein Verfahren zur Bearbeitung von Hartmetall und Hartmetallbauteilen mittels Laserstrahlbearbeitung.

Die nachveröffentlichte WO 2008/087612 A1 beschreibt ein Schneidrädchen, bei welchem in die Schneidkante Nuten eingearbeitet sind, so dass sich die äußeren Enden gegenüberliegender Nuten in den geneigten, die Schneidkante ausbildenden Seitenflächen des Rädchens schneiden. Die Herstellung des Rädchens kann durch Laserbearbeitung erfolgen.

Der Erfindung liegt somit die Aufgabe zugrunde, ein Verfahren zur Herstellung von Schneidrädchen, insbesondere von Glasschneidrädchen, bereitzustellen, so dass die Schneidrädchen eine hohe Lebensdauer aufweisen und bei welchen Trennflächen und Bruchkanten der anzuritzenden Körper mit sehr hoher Qualität auch über die gesamte Lebensdauer der Rädchen erzielt werden können.

Diese Aufgabe kann überraschend durch ein Verfahren nach Anspruch 1 gelöst werden. Bei dem erfindungsgemäßen Verfahren wird der Laserstrahl im Wesentlichen parallel einer Hauptebene auf die Umfangsfläche des Rädchens gerichtet und derart Material abtragend über den Außenumfang des Rädchens geführt wird, um diese zu strukturieren, wobei in zumindest einem Teil oder in sämtlichen der Zahnzwischenräumen Schneidkanten resultieren, die sich zumindest mit einer Richtungskomponente in einer senkrecht zur Drehachse des Rädchens stehenden Hauptebene erstrecken, und wobei die Schneidkanten der Zahnzwischenräume zumindest in etwa in einer Ebene mit den Schneidkanten der Zähne liegen, in der Weise, dass sämtliche der Schneidkanten der Zähne und der Zahnzwischenräume in einem lateralen Abstand von ≤ 5µm von der die Umfangslinie des Rädchens umfassenden Hauptmittelebene liegen und dass die Abtragung mittels eines Laser-Strahls eines Pikosekunden- oder Femtosekunden-Lasers erfolgt.

Es wird hierbei davon ausgegangen, dass durch die Strukturierung der Grobverzahnung der Rädchen mittels eines Laserstrahls zum einen Außenflächen der Zähne aus dem Rädchenkörper herausgearbeitet werden können, die anscheinend aufgrund ihrer sehr hohen geometrisch Exaktheit deutlich weniger einem Verschleiß unterliegen. Weiterhin erfolgt anscheinend bei der Laserbearbeitung insgesamt nur ein vergleichsweise geringer Energieeintrag in die Rädchen, die zur Erzielung einer ausreichend hohen Lebensdauer aus speziellen Hartmetallwerkstoffen bestehen. Es wird in Kenntnis der Erfindung angenommen, dass im Gegensatz hierzu bei einer Strukturierung durch Funkenerosion nach der EP 166 426 doch ein relativ hoher Energieeintrag in das Grundmaterial der Rädchen erfolgt, der zusammen mit den hohen mechanischen Beanspruchungen bei der Erzeugung der Tiefenrisse über die Lebensdauer der Rädchen zu unerwünschten Verschleißerscheinungen des Hartmetallwerkstoffes führt, die einem Ausbrechen von Zahnbereichen Vorschub leisten. Überraschenderweise können derartige Nachteile bei der Laserstrukturierung der Glasschneidrädchen vermieden werden, so dass mittels des erfindungsgemäßen Verfahrens Glasschneidrädchen herstellbar sind, mittels derer sehr schmale und gleichmäßige Ritzlinien über die gesamte Lebensdauer des Rädchens in den Glaskörper eingebracht werden können, wodurch über die Lebensdauer des Rädchens auch eine sehr gleichbleibende Qualität der Trennflächen und Bruchkanten erzielt werden kann.

Weiterhin können durch das erfindungsgemäße Verfahren Grobverzahnungen mit Zahnstrukturen hergestellt werden, die durch bisher bekannte Herstellungsverfahren unter Verwendung von Schleifrädern oder mittels elektrischer Entladungen nicht herstellbar sind. Insbesondere ist eine Laserstrahlstrukturierung der Zahnzwischenräume und/oder der Zahnoberflächen möglich. Durch derartige Verzahnungen kann das Bild der Trennflächen und Bruchkanten weiter verbessert werden. Durch eine sehr exakte Steuerung der Pulsleistung des Lasers in Abhängigkeit von der Lage des Fokuspunktes können die Zwischenzahnräume der Zahnstruktur zudem sehr exakt ausgebildet werden und auch Schneidkanten in den Zahnzwischenräumen und/oder den Stirnseiten der Zähne sowie seitlich zurückspringende Stirnkanten der Schneidezähne erzeugt werden. Erfindungsgemäß kommen hierzu Pikosekunden- oder Femtosekunden-Laser zum Einsatz.

Schließlich haben sich erfindungsgemäß hergestellte Rädchen auch bei der Erzeugung von Formschnittlinien gegenüber herkömmlichen Rädchen als vorteilhaft erwiesen. Bei einem Formschnitt ist die Schnitt- oder Ritzlinie nicht-linear, z.B. bogenförmig. Die erfindungsgemäß hergestellten Rädchen können der gewünschten Form auch bei engen Krümmungsradien besonders leicht und exakt folgen. Ferner sind die Rädchen bei geschlossenem Formschnitt (d.h. bei in sich geschlossener Formlinie wie z.B. einem Kreisbogen) vorteilhaft einsetztbar, da der Formkörper leichter und exakter von dem umgrenzenden Material separiert werden kann.

Zur Erzeugung der Zahnstrukturen kann das Schneidrädchen in vorteilhafter Weise mittels eines Antriebes in Rotation versetzt und der Laserstrahl während der Drehung des Schneidrädchens Material abtragend mit dem Außenumfang des Rädchens in Wechselwirkung gebracht wird. In Abhängigkeit von der Auftreffstelle des Laserstrahls auf dem Außenumfang des Rädchens kann die Pulsleistung des Kurzpulslasers moduliert werden, so dass beim Abscannen des Rädchenumfangs mit dem Laser dieser nur dann aktiviert wird, wenn an dem jeweiligen Abtastort (potentieller Auftreffort) ein Materialabtrag zur Erzeugung der jeweiligen Zahnstruktur gewünscht ist. An dem Abtastort, an dem ein Materialabtrag nicht erwünscht ist, z.B. bei einem Zahnrücken, wird die Laserleistung vermindert oder auf Null gefahren. Die Modulation der Laserleistung kann somit in Abhängigkeit von dem lateralen Abstand des Auftreffpunktes von einer Hauptebene des Rädchens und/oder von dem Ort entlang des Rädchenumfangs, der durch einen Drehgeber des Rädchenantriebes bestimmt werden kann, erfolgen. Dies ist dann besonders vorteilhaft, wenn der Rädchengrundkörper beidseitig der Hauptebene angeordnete geneigte Seitenflächen aufweist, die zur Hauptebene hin konvergieren und wenn der Laserstrahl im Wesentlichen parallel zur Hauptebene auf die Rädchenumfangsfläche gerichtet wird. Überraschenderweise ist auch bei dieser konstruktiv besonders einfachen Anordnung ein Materialabtrag mittels des Lasers an einem Rädchen mit geneigt zur Hauptmittelebene verlaufenden Seiten der Umfangsfläche möglich, so dass dann auch der Laserstrahl in einem Winkel auf die abzutragende Umfangsfläche des Rädchens auftrifft.

Gegebenenfalls kann zur Erzeugung der Zahnstrukturen das Schneidrädchen auch mittels eines Antriebes intermittierend in Rotation versetzt werden, wobei in bestimmten Zeitintervallen keine Rotation erfolgt, wobei der Laserstrahl in den Zeitintervallen mit nicht rotierendem Schneidrädchen Material abtragend mit dem Außenumfang des Rädchens in Wechselwirkung gebracht wird. Die Schrittweite bei der intermittierenden Rotation kann derart gewählt sein, dass das Rädchen von Bearbeitungsstelle zu Bearbeitungsstelle des Rädchenumfangs gedreht wird. Die gewählte Schrittweite kann jedoch auch kleiner oder wesentlich kleiner als der Abstand der Bearbeitungsstellen auf dem Rädchenumfang sein, so dass nach einer Anzahl von Rotationsschritten die Rotation des Rädchens angehalten wird, um dieses zu bearbeiten. Die Schrittweite der Rotation kann über den Rädchenumfang konstant sein, so dass ein Schrittmotor eingesetzt werden kann.

Die Neigung der umfänglichen Seitenflächen des Rädchens zu einer Hauptebene, insbesondere zu der durch den Rädchenschwerpunkt laufenden Hauptmittelebene, zu der die Seitenflächen hin zusammenlaufenden, kann ≤ ±60-75°, ≤ ±50-45° oder ≤ ±30 betragen, so dass die Seitenflächen einen Winkel von ≥ 30-60° zueinander einschließen. Es versteht sich, dass die Seitenumfangsflächen in Abhängigkeit von der Eindringtiefe des Rädchens auch einen Winkel von zumindest nahezu 0° aufweisen können, vorausgesetzt, dass zum Ritzen geeignete Zähne aus dem Rädchengrundmaterial herausgearbeitet werden können. So können die Zähne auch aus einer auf dem Rädchenumfang aufgesetzten Umfangsrippe mittels des Laserstrahls herausgearbeitet werden, so dass durch Strukturierung der Rippe die Zähne herausgebildet werden können. Die von dem Rädchenumfang radial vorstehende Rippe kann eine senkrecht zu einer Rädchenhauptebene verlaufende radiale Umfangsfläche aufweisen. Die Laserabtragung kann auch derart erfolgen, dass die senkrecht zur Hauptmittelebene oder parallel zur Drehachse des Rädchens verlaufende Basislinie der Zahnzwischenräume nicht linear ist, beispielsweise mit zunehmendem Abstand von der radialen Umfangslinie oder der Hauptmittelebene radial zum Zentrum des Rädchens hin abfällt. Vorzugsweise fällt diese Basislinie unter Ausbildung einer Zahnzwischenraumschneidkante winkelförmig ab. Hierdurch können insgesamt Strukturierungen erzeugt werden, mittels derer besonders schmale und exakte Ritzlinien erzeugt werden können.

Im Folgenden werden besonders geeignete Rädchen beschrieben, die mittels des erfindungsgemäßen Verfahrens hergestellt sind.

Erfindungsgemäß ist die Form der Zähne somit so ausgebildet, dass deren Umfangslinie sehr exakt auf einer Hauptebene, insbesondere der Hauptmittelebene, des Rädchens liegt. Die Schneidkanten der Zahnzwischenräume können somit allgemein lateral beabstandet von den Seitenflächen des Rädchens und/oder den seitlichen Zahnflanken angeordnet und zur Hauptmittelebene des Rädchens hin versetzt sein. Bezogen auf die Zahnbreite sind die Schneidkanten der Zahnzwischenräume vorzugsweise in dem mittleren Bereich derselben angeordnet. Das Rädchen kann so ausgebildet sein, dass sämtliche der Schneidkanten der Zähne und der Zahnzwischenräume in einem lateralen Abstand von ≤ 4 µm, vorzugsweise ≤ 2 bis 3µm oder ≤ 1 µm von der die Umfangslinie des Rädchens umfassenden Hauptmittelebene liegen.

Besonders bevorzugt sind die Schneidkanten der Zahnzwischenräume und die Schneidkanten der Zähne zumindest in etwa in derselben Hauptebene des Rädchens angeordnet, d.h. einer Ebene senkrecht zur Drehachse des Rädchens, vorzugsweise der Hauptmittelebene des Rädchens, die durch den Rädchenschwerpunkt verläuft.

Nach einer bevorzugten Ausführungsform laufen die geneigten Seitenflächen des Rädchens in einem Grat zusammen, wobei die Schneidzähne auf dem Grat aufgesetzt sind, der als Schneidkante im Bereich der Zahnzwischenräume ausgebildet ist, wodurch die Zähne besonders verschleißfest und langlebig sind. Die Schneidzähne können hierbei eine dachartige Form aufweisen, wobei die Zahnoberseiten von den benachbarten Bereichen der geneigten Seitenflächen des Rädchens radial beabstandet sind. Die Zahnoberseiten können in einem Winkel von beispielsweise ≤ 30°, ≤ 20° oder ≤ 5-10° zu den Seitenflächen geneigt sein oder im Wesentlichen parallel mit diesen verlaufen. Die Seitenflächen der Zähne können mit den Seitenflächen des Rädchens einen Winkel einschließen. Die Zahnseitenflächen können hierbei zumindest im wesentlichen parallel zu der Hauptmittelebene des Rädchens verlaufen oder mit dieser einen Winkel einschließen, der spitzer ist als der Winkel der Hauptmittelebene mit den Seitenflächen des Rädchens.

Die Breite der Schneidzähne kann größer als die Umfangserstreckung derselben sein, was auch allgemein gelten kann. Die Schneidzähne können hierbei in einer in Umfangsrichtung verlaufenden Rinne angeordnet sein. Die Zahnoberflächen können mit den seitlich der Rinne angeordneten Bereichen des Rädchens fluchtend angeordnet sein. Insgesamt sind die Schneidrädchen hierdurch in besonders engen Dimensionstoleranzen herstellbar und können in ihrer Zahngeometrie für verschiedene Anwendungsfälle einfach angepasst werden.

Alternativ können die Zahnzwischenräume durch Vertiefungen in zumindest einer oder beiden Seitenflächen des Rädchens ausgebildet sein. Es versteht sich, dass gegebenenfalls auch an einem Glasschneidrädchen die Schneidzähne auf dem durch die zusammenlaufenden geneigten Seitenflächen des Rädchens gebildeten Grat aufgesetzt sind, wobei zugleich durch Vertiefungen einer oder beider Seitenflächen des Rädchens die Zahnzwischenräume in ihrer Form weiter ausgestaltet sein können.

Vorzugsweise sind die Zahnzwischenräume als taschenförmige Ausnehmungen der geneigten Seitenflächen des Rädchens ausgebildet. Die Ausnehmungen können sich in lateraler Richtung bis zu der Hauptmittelebene des Rädchens erstrecken oder lateral in einem Abstand von dieser enden. Besonders bevorzugt erstrecken sich die Zahnzwischenräume bzw. die taschenförmigen Ausnehmungen in lateraler Richtung derart weit über die geneigten Seitenflächen, dass die Endbereiche derselben bei dem Ritzvorgang außer Eingriff mit der Glasplatte sind. Ausgehend von der Hauptmittelebene des Rädchen können die Zahnzwischenräume bzw. Ausnehmungen eine laterale Erstreckung von ≥ 10-15 µm oder ≥ 20-25 µm oder vorzugsweise ≥ 30-50 µm betragen. Die Weite der Ausnehmungen im Bereich der Hauptmittelebene und/oder an deren der Hauptmittelebene abgewandtem Endbereich, d.h. die Erstreckung der Ausnehmungen in Umfangsrichtung des Rädchens, kann ≥ 10-15 µm, ≥ 20-25 µm oder ≥ 30 µm betragen, die Weite kann auch ≤ 30-40 µm oder ≤ 50-75 µm oder ≤ 100 µm betragen. Die taschenförmigen Ausnehmungen können einen zumindest im Wesentlichen ebenen Grund aufweisen. Der Grund kann parallel zu der Oberseite der angrenzenden Bereiche der geneigten Seitenflächen und/oder der benachbarten Zahnoberflächen verlaufen, so dass die taschenförmigen Ausnehmungen praktisch eine konstante Tiefe aufweisen können. Die Tiefe der Taschen kann allgemein der Zahnhöhe entsprechen. Der Grund kann auch in einem kleinen Winkel von beispielsweise ≤ 20-30° oder ≤ 10-15° oder ≤ 5° zu der Oberseite der Seitenflächen geneigt sein, wobei der Grund zur Hauptmittelebene des Rädchens jeweils ansteigen oder abfallen kann. Die Seitenwände der taschenförmigen Ausnehmungen können zumindest annähernd senkrecht zu dem Grund der Ausnehmungen und/oder der Oberfläche der angrenzenden Bereiche der geneigten Seitenflächen des Rädchens verlaufen, beispielsweise in einem Winkel von ≤ 20-30° oder ≤ 10-15° oder ≤ 3-5°.

Vorzugsweise ist der eingeschlossene Flankenwinkel der Zahnzwischenräume zumindest im Wesentlichen gleich dem eingeschlossenen Flankenwinkel der Zähne. Dies bezieht sich zumindest auf den Bereich der Zahnzwischenräume, in welchem das Rädchen in die Glasplatte eindringt, z.B. ausgehend von dem Zahnrücken über eine Tiefe von ≤ 5-10 µm oder 15-20 µm. Der eingeschlossene Flankenwinkel der Zahnzwischenräume sowie auch der Flankenwinkel der Zähne kann hierbei jeweils der Neigung der zusammenlaufenden Seitenflächen des Rädchens entsprechen. Gegebenenfalls kann der eingeschlossene Flankenwinkel der Zahnzwischenräume um ≤ ± 25° bis 30° oder ≤ ± 15° bis 20°, gegebenenfalls ≤ ± 5° bis 10° oder weniger von dem eingeschlossenen Flankenwinkel der Zähne abweichen, beispielsweise ≤ ±2° bis 3° oder ≤ ± 1°. Hierdurch können bei einfacher Herstellbarkeit der Schneidrädchen sehr gute Schneidergebnisse erzielt werden.

Gegebenenfalls kann für manche Anwendungsfälle der eingeschlossene Flankenwinkel der Zahnzwischenräume auch kleiner als der Flankenwinkel der Zähne sein, so dass die Flanken der Zahnzwischenräume steiler angestellt sind als die Zahnflanken und mit der Hauptebene des Rädchens einen kleineren Winkel einschließen. Eine derartige Ausgestaltung ist aufwändiger herzustellen, die Kantenausbildung der Glasplatten kann hierdurch unter Umständen jedoch weiter verbessert werden.

Die Flanken der Schneidzähne und/oder der Zahnzwischenräume können zumindest im Wesentlichen eben ausgeführt sein, wodurch die Herstellbarkeit der Rädchen vereinfacht und deren Lebensdauer erhöht wird. Die Flanken der Zahnzwischenräume können hierbei auch konvex ausgeführt sein oder eine andere Ausformung aufweisen, was auch allgemein gelten kann. Ferner können allgemein die Flanken der Schneidzähne zumindest im Wesentlichen eben, konkav oder konvex ausgeführt sein.

Die Schneidkanten der Zahnzwischenräume können um ≥ 0,5-1 µm oder ≥ 1,5-2 µm, beispielsweise ≥ 3-4 µm oder ≥ 5-10 µm von den Schneidkanten der Zähne radial zurückversetzt sein, gegebenenfalls kann der Versatz auch um ≤ 20-30 µm, vorzugsweise ≤ 15-20 µm, beispielsweise auch ≤ 10-12 µm oder ≤ 8 µm betragen. Der radiale Abstand der Schneidkanten der Zahnzwischenräume von denen der Zähne kann derart bemessen sein, dass bei dem Ritzvorgang bei bestimmungsgemäßer Krafteinwirkung auf das Glasschneidrädchen die Schneidkanten der Zahnzwischenräume in die Glasplatte eindringen, d.h. deren Oberfläche durchdringen. Die aufgewandte Anpresskraft kann hierbei ≤ 10 N, insbesondere ≤ 5-7 N oder ≤ 3-4 N betragen, gegebenenfalls auch ≤ 1-2 N. Die erforderliche Anpresskraft kann hierbei von dem Material der zu ritzenden Glasplatte abhängen. Vorzugsweise ist die Anpresskraft derart gewählt, dass der Tiefenriss sich vollständig über die Stärke der Glasplatte erstreckt. Gegebenenfalls können jedoch auch die Schneidkanten der Zahnzwischenräume zumindest etwa oder genau auf Höhe der Schneidzähne bzw. der radialen Umfangslinie des Rädchens enden und somit die gleiche radiale Erstreckung haben. Dies kann für einen Teil der Umfangserstreckung der Zahnzwischenräume gelten oder für die gesamte Umfangserstreckung derselben. Die Zähne werden dann dadurch definiert, dass diese zumindest am Außenumfang und/oder bei einem radialen Abstand von ca. 5-10 µm von dem Außenumfang des Rädchens eine größere Breite als die Zahnzwischenräume haben.

Die Schneidzähne können eine Längserstreckung in Umfangsrichtung von ≥ 2-5 µm aufweisen. Vorzugsweise weisen die Schneidzähne eine Längserstreckung in Umfangsrichtung des Rädchens von 10-150 µm oder 10-100 µm auf, besonders bevorzugt eine solche von 10-50 oder bis 75 µm, insbesondere ca. 10-30 µm. Die Längserstreckung der Zähne in Umfangsrichtung kann ≤ 250-300 µm betragen, vorzugsweise ≤ 175-200 µm.

Die Längserstreckung der Zahnzwischenräume in Umfangsrichtung des Rädchens kann ≥ 2-5 µm betragen, vorzugsweise 5-150 µm oder 10-100 µm, besonders bevorzugt ca. 10-75 µm oder 20-50 µm. Vorzugsweise beträgt die Längserstreckung der Zahnzwischenräume ≤ 250-300 µm, insbesondere ≤ 175-200 µm.

Vorzugsweise ist die Längserstreckung einiger oder sämtlicher Zähne entlang dem Rädchenumfang kleiner/gleich der Längserstreckung der Zahnzwischenräume in dieser Richtung. Allgemein kann das Verhältnis der Länge der Zwischenräume zu der Länge der Zähne bzw. Zahnrücken in dem Bereich von 5 bis 0,5 bzw. 4 bis 0,75 oder 3 bis 0,75 liegen, besonders bevorzugt in dem Bereich von 2 bis 1 oder 1,75 bis 1 oder 1,5 bis 1. Das Verhältnis der Zahnhöhe, ausgehend von der Basis der Zahnzwischenräume, zu der Längserstreckung der Zahnrücken kann in dem Bereich von 0,5:1 bis 1:10, vorzugsweise 1:1 bis 1:5, besonders bevorzugt ca. 1:2 bis 1:4 liegen.

Es versteht sich, dass die Schneidrädchen nur eine Art von Schneidzähnen und nur eine Art von Zahnzwischenräumen aufweisen können. Die Schneidrädchen können jedoch gegebenenfalls auch mehrere unterschiedliche Arten von Schneidzähnen und/oder mehrere unterschiedliche Arten von Zahnzwischenräumen aufweisen, die in einer regelmäßigen Abfolge aufeinander folgen und eine mehrere Zähne umfassende Identitätsperiode ausbilden. Die unterschiedlichen Arten der Zähne und/oder Zahnzwischenräume können sich jeweils in ihrer Umfangserstreckung, Höhe, Breite und/oder Gestalt unterscheiden. Es können beispielsweise Zähne mehrerer Arten hintereinander angeordnet sein, wobei eine erste Zahnart überwiegend Tiefenrisse erzeugt und eine andere Zahnart, die den Zähnen der ersten Art jeweils unmittelbar nachfolgen kann, überwiegend die Glasplattenoberfläche durchschneidet, um so insgesamt eine optimale Bruchkante zu ergeben. Entsprechend können zusätzlich oder alternativ zwischen einer ersten und gegebenenfalls einer zweiten Zahnart (oder der zweiten Zahnart nachfolgend) weitere Zähne vorgesehen sein, welche einen Schlupf des Zahnrädchens über die Glasplatte verhindern. Es versteht sich, dass die Zahnzwischenräume zwischen den jeweils unterschiedlichen Zähnen unterschiedlich ausgestaltet sein können, gegebenenfalls können die Zahnzwischenräume jedoch jeweils auch in gleicher Weise ausgestaltet sein.

Die Schneidzähne können an der in Schneidrichtung vorderen und/oder hinteren Stirnseite zur Hauptmittelebene keilförmig angestellte Stirnseiten oder Stirnseitenbereiche aufweisen, so dass die Stirnseiten der Zähne mit zunehmendem lateralem Abstand von der einer Hauptebene, insbesondere der Hauptmittelebene, von der Stirnseite nach hinten zurückweichen.

Insbesondere können die Schneidzähne an der in Schneidrichtung vorderen und/oder hinteren Stirnseite Schneidkanten aufweisen, die sich zumindest über einen Teil der Höhe oder die gesamte Höhe der jeweiligen Zahnstirnseite erstrecken. Diese Schneidkanten können in der Hauptmittelebene des Rädchens liegen, allgemein können sie lateral beabstandet von den Seitenflächen des Rädchens und/oder den seitlichen Zahnflanken angeordnet und zur Hauptmittelebene des Rädchens hin versetzt sein. Diese Schneidkanten können in in der Höhe ansteigende Übergangsbereiche der Zahnzwischenräume zu den Zahnrücken übergehen. Diese Schneidkanten können sich auch im Wesentlichen senkrecht zur Umfangslinie des Rädchens in Richtung auf das Zentrum des Rädchens erstrecken. Die stirnseitigen Schneidkanten erstrecken sich vorzugsweise bis zu den Schneidkanten der Zahnrücken hin. Die Schneidkanten können an den zur Umfangsrichtung des Rädchens keilförmig angestellten Stirnseiten der Zähne ausgebildet sein.

Die Schneidzähne können in der Draufsicht eine im Wesentlichen polygone Gestalt aufweisen, z.B. eine viereckige (insbesondere quadratische, rechteckige oder zumindest im Wesentlichen rautenförmige Gestalt), sechseckige oder auch dreieckige, wobei das Polygon vorzugsweise regelmäßig ausgebildet und/oder symmetrisch zur Hauptmittelebene angeordnet ist. Im Falle einer polygonalen Ausbildung der Zähne oder allgemein kann in der Draufsicht jeweils mindestens eine Ecke zumindest in etwa in der Hauptmittelebene angeordnet sein. Es kann jeweils auch eine Kante des Polygons quer oder senkrecht zur Hauptmittelebene verlaufen. Von den Ecken können jeweils - wie oben beschrieben - Schneidkanten ausgehen, die sich zum Zentrum des Rädchens hin erstrecken oder in einen Übergangsbereich der Zahnzwischenräume übergehen können. Die mindestens eine Zahnecke kann jeweils in oder entgegen der Schneidrichtung vorangestellt sein. Das Polygon kann jeweils eine Breite aufweisen, die ≥ 1/2, ≥ 3/4 oder ≥ der 1-fachen Zahnhöhe ausgehend von der Basis des benachbarten Zahnzwischenraums ist. Die Zahnbreite kann derart bemessen sein, dass sich die Zahnoberseite bis unterhalb der Basis des benachbarten Zahnzwischenraums erstreckt, was in besondere bei auf dem Grat aufgesetzten Zähnen der Fall sein kann.

Die Zahnoberseiten und/oder Zahnseiten können jeweils eine Aufrauung und/oder eine Feinverzahnung aufweisen, die bei dem Ritzvorgang einen Schlupf des Rädchens über die Glasplattenoberfläche verhindern kann. Die Aufrauung kann beispielsweise durch geeignete Schleifmittel erfolgen. Die Strukturhöhe der Aufrauung oder Feinverzahnung kann deutlich kleiner als die Zahnhöhe, beispielsweise ≤ 1/4, ≤ 1/8 oder ≤ 1/16 derselben sein. Die Oberflächenrauhigkeit Rz nach DIN/ISO 4287 kann ≤ 4,5-5 µm oder ≤ 3,5-4 µm oder auch ≤ 2,5-3 µm sein, z.B. in dem Bereich von 0,5 bis 5 µm, vorzugsweise 0,75 bis 2 µm liegen. Die Rauhigkeit Ra nach DIN/ISO 4287 kann ≤ 0,4-0,5 µm sein, z.B. in dem Bereich von 0,05-0,5 µm oder 0,1-0,4 µm, vorzugsweise in den Bereich von 0,1-0,3 µm liegen. Die Feinverzahnung kann regelmäßig oder unregelmäßig sein und in Form von Zahnrippen, die zur Schneidkante hin konvergieren können oder zumindest mit einer Richtungskomponente zur Schneidkante hin verlaufen, in Form isolierter, im wesentlichen punktförmiger Erhebungen oder dergleichen ausgeführt sein. Gegebenenfalls können auch die Zahnzwischenräume eine Aufrauung und/oder Feinstrukturierung aufweisen, für die das oben Gesagte gelten kann und die vorzugsweise nur geringfügig von der Schneidkante der Zahnzwischenräume beabstandet sind oder sich bis zu dieser heran erstreckt, so dass diese Feinstrukturierung bei üblicher Benutzung des Schneidrädchens mit der zu ritzenden Glasplatte in Wechselwirkung kommt.

Bezogen auf den Umfang des Rädchens können die Zahnzwischenräume von Ihrer Basis zum benachbarten Zahnrücken hin über einen Übergangsbereich in einer Höhe ansteigen, wobei der Übergangsbereich über seine Längserstreckung vorzugsweise teilweise oder vollständig als Schneidbereich ausbildet ist. Die Einbringung von Rissen in die Glasplattenoberfläche kann hierdurch auch im Zahnzwischenraumbereich besonders wirksam erfolgen, so dass seitliche Absplitterungen vermieden und eine Bruchfläche mit besonders hoher Kantenqualität erzielt wird. Der Schneidbereich in diesem Übergangsbereich kann zumindest in etwa den gleichen Flankenwinkel aufweisen, wie der Schneidbereich der Zähne und/oder der Zahnzwischenräume im Bereich deren Basis. Hierdurch kann gegebenenfalls der gesamte Umfang des Rädchens als Schneidbereich ausgebildet sein, d.h. auch der gesamte Bereich zwischen den Schneidrücken der Zähne. Der Übergangsbereich zwischen den Zwischenräumen (bzw. der Basis derselben) zu den Zähnen kann entlang des Rädchenumfangs zumindest im Wesentlichen linear, konkav oder konvex ausgebildet sein. Gegebenenfalls können in dem Zahnzwischenraum und/oder in dem Übergangsbereich desselben zu den benachbarten Zähnen ebenfalls zahnartig wirkende Erhebungen vorgesehen sein, die jedoch von den benachbarten Zahnrücken in radialer Richtung zurückstehen.

Die erfindungsgemäßen Glasschneidrädchen können aus polykristallinen Diamant (PKD) oder aus einem Hartmetallwerkstoff bestehen, der bevorzugt mit einer Beschichtung versehen ist, die verschleißmindernde Eigenschaften haben kann. Eine derartige Beschichtung kann insbesondere eine nano-strukturierte Hartwerkstoffbeschichtung sein, wobei die Schneidflanken der Schneide auf einer Rillenbreite von im Mittel unter einem Mikrometer poliert sein können. Eine derartige Beschichtung ist in der WO 2004/101455 beschrieben, die hiermit voll inhaltlich mit umfasst sei.

Das Rädchen kann allgemein einen äußeren Durchmesser in dem Bereich von 1 bis 20mm, vorzugsweise 2 bis 10mm oder 2 bis 6mm aufweisen. Die Breite des Rädchens kann in dem Bereich von 0,3 bis 5mm, vorzugsweise 0,6 bis 4mm oder 1 bis 2mm liegen.

Insbesondere können mittels der erfindungsgemäßen Schneidrädchen auch Dünnglasplatten im oberen Bereich der Glasstärke durch entsprechend eingestellten Anpreßdruck derart geritzt werden, dass ein sich im wesentlichen über die gesamte Stärke der Glasscheibe erstreckender Tiefenriss erzeugt wird.

Es versteht sich, dass die erfindungsgemäßen Schneidrädchen allgemein auch zum Ritzen anderer Glaskörper wie z.B. Glasröhrchen, Hohlglaskörper oder Glaskörper mit gekrümmten Oberflächen wie gewölbte Bildschirme oder Displays auch im Bereich der Wölbungen eingesetzt werden können. Der Glaskörper kann allgemein auch aus einem gehärteten, oberflächenmodifizierten und/oder geätzten Glas bestehen.

Allgemein kann der Glaskörper auch aus einem oberflächlich beschichteten oder oberflächlich mit einer Folie versehenen Glas bestehen. Die Folie kann eine Schutzfolie oder Funktionsfolie sein. Die kann physikalisch und/oder chemisch mit der Glasoberfläche zur Haftung gebracht sein. Die Beschichtung kann eine aufgedampfte Metallschicht, Kunststoffbeschichtung, optische Beschichtung wie eine Antireflexbeschichtung, wasserabweisende Beschichtung oder sonstige Funktions- oder Schutzschicht sein. Der Ritzvorgang kann nach einer Variante derart durchgeführt werden, dass die Schneidkanten der Zähne und der Zahnzwischenräume die Beschichtung nur teilweise oder praktisch vollständig durchdringen, ohne mit dem Glaskörper selber in ritzenden Eingriff zu kommen. Alternativ können die Schneidkanten der Zähne und Zahnzwischenräume auch einen Tiefenriss in dem Glaskörper erzeugen, der den Glaskörper vollständig durchdringen kann. Durch die Schneidkanten in den Zahnzwischenräumen kann jeweils eine saubere, schmale und durchgehende Trennlinie in die Folie oder Beschichtung eingebracht werden.

Die Erfindung wird nachfolgend beispielhaft beschrieben und anhand der Figuren beispielhaft erläutert. Es zeigen:
- Fig. 1: eine schematische Darstellung einer Vorrichtung zur Durchführung des erfindungsgemäßen Verfahrens,
- Fig. 2: eine Ausführungsform eines erfindungsgemäß hergestellten Schneidrädchens in Seitenansicht (Fig. 2a) und in Frontalansicht (Fig. 2b), in Detailansichten von der Seite (Fig. 2c), im Querschnitt (Fig. 2d), in Frontalansicht (Fig. 2e) und in perspektivischer Darstellung (Fig. 2f) sowie eine Ansicht des in eine Glasplatte eingedrungenen Schneidbereichs des Rädchens (Fig. 2g),
- Fig. 3: eine weitere Ausführungsform eines Schneidrädchens in Seitenansicht (Fig. 3a) und in Frontalansicht (Fig. 3b), in Detailansichten von der Seite (Fig. 3c), im Querschnitt (Fig. 3d), in Frontalansicht (Fig. 3e) und in perspektivischer Darstellung (Fig. 3f) sowie eine Ansicht des in eine Glasplatte eingedrungenen Schneidbereichs des Rädchens (Fig. 3g),
- Fig. 4: eine Darstellung von Ritzlinien eines herkömmlichen Schneidrädchens mit angeschliffener Schneidkante, eines herkömmlichen Schneidrädchens mit Grobverzahnung und eines erfindungsgemäßen Schneidrädchens, und

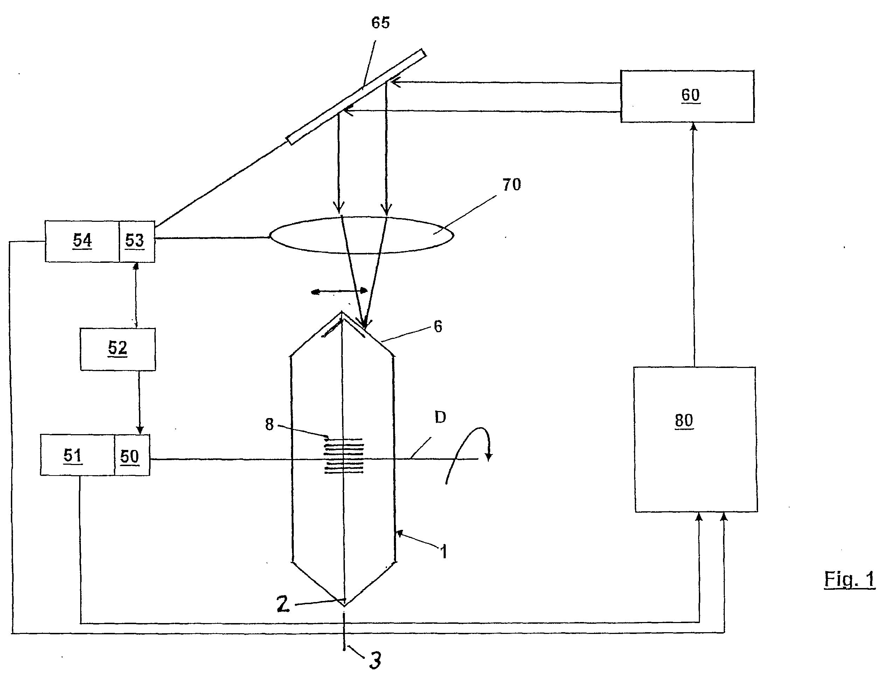

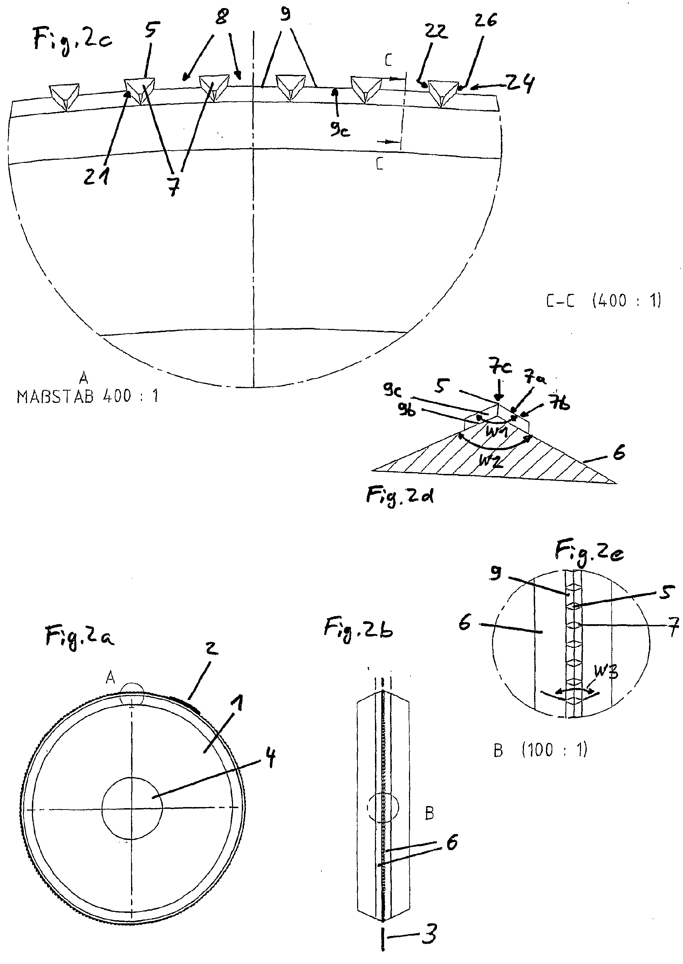

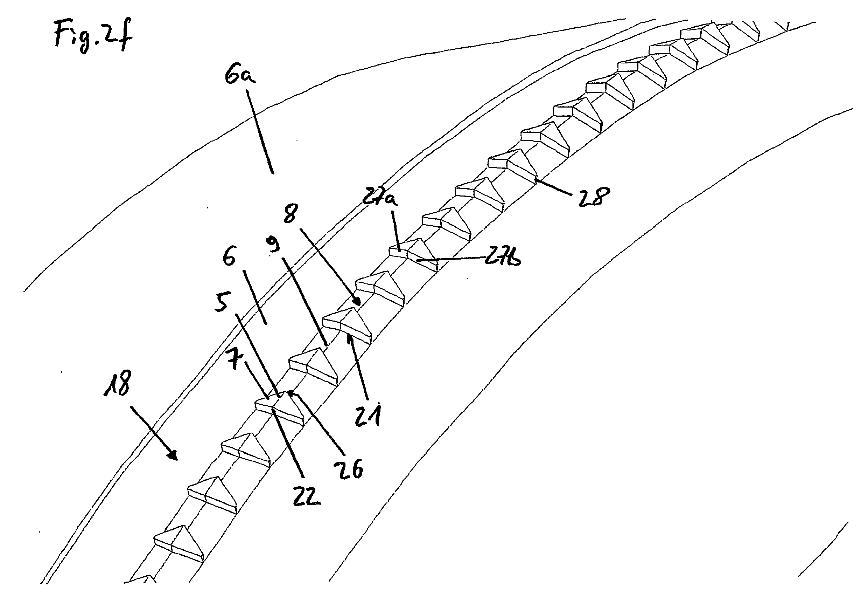

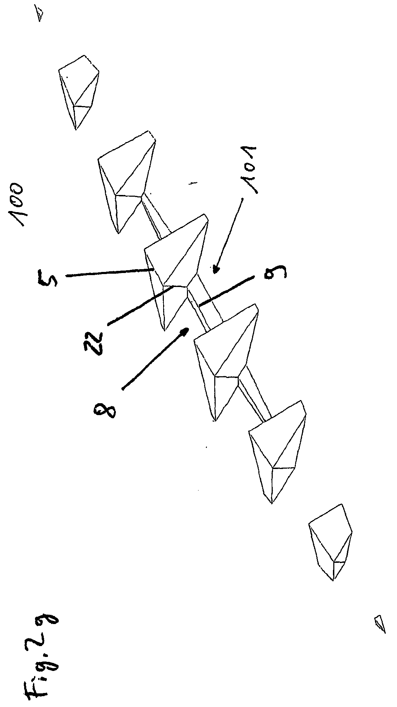

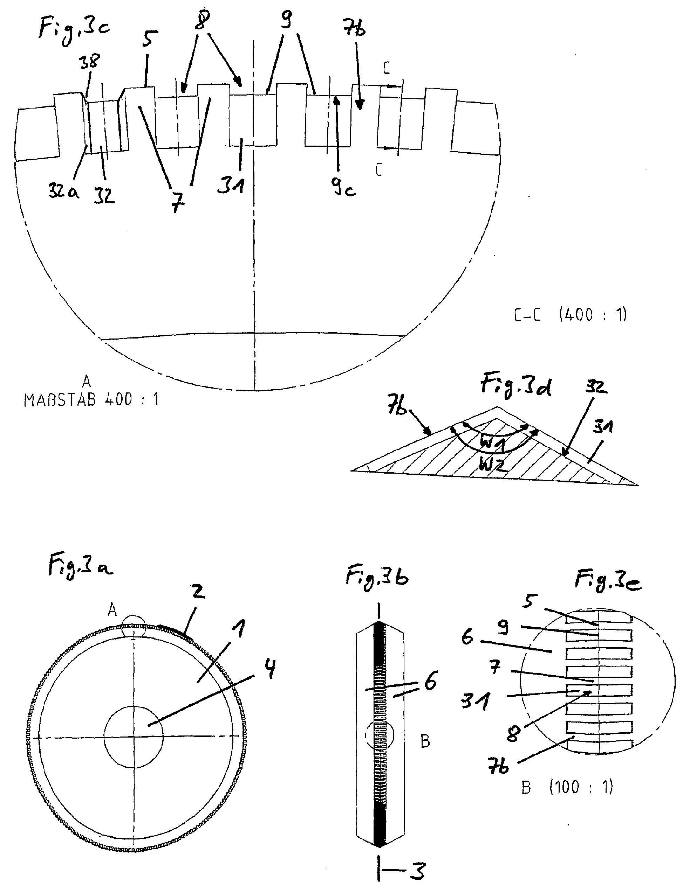

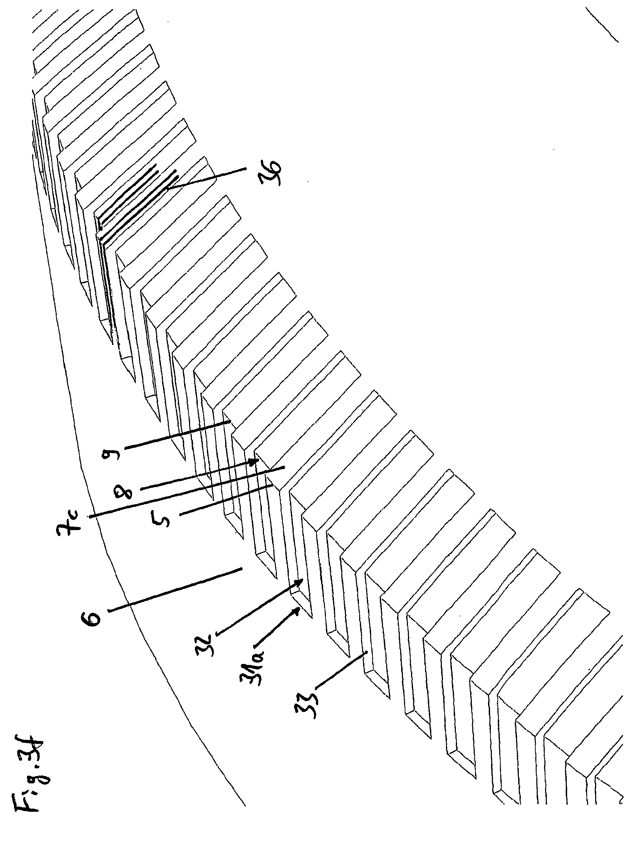

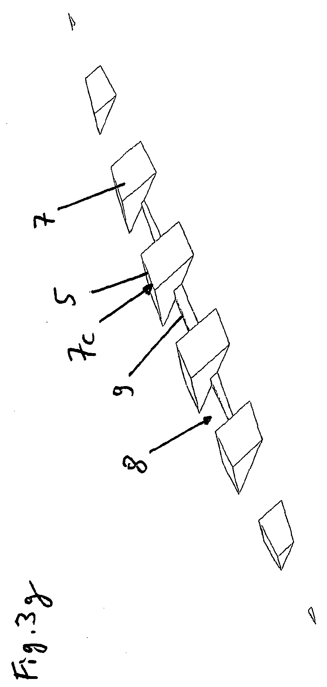

Figur 1 zeigt eine Vorrichtung zur Durchführung des erfindungsgemäßen Verfahrens und zur Herstellung der Rädchen nach den Figuren 2 und 3. Das um die Achse D drehbar gelagerte Schneidrädchen 1 wird durch den Motor 50 in Drehung versetzt. Zur Strukturierung der Außenumfangsfläche des Rädchens im Bereich der Schneidkante wird ein Kurzpulslaser 60, insbesondere ein Pikosekundenlaser, eingesetzt. Der Laserstrahl wird über die Umlenkeinrichtung 65, die als Umlenkspiegel ausgebildet sein kann, und die Fokussieroptik 70 auf die Außenumfangsfläche des Rädchens im Bereich der radialen Umfangslinie 2 gerichtet. Der Laserstrahl kann hierbei auf die geneigten Seitenflächen 6 des Rädchens gelenkt werden, um Material des Rädchengrundkörpers unter Ausbildung der Zahnstruktur abzutragen. Während der Drehung des Schneidrädchens mittels des Motors kann der Laserstrahlfokus parallel zur Drehachse D des Rädchens verschoben werden, um zur Ausbildung der Zahnstruktur Ausnehmungen in den Außenumfang des Rädchens einzubringen. Hierzu ist eine Verschiebeeinrichtung 53 für eine Umlenkeinrichtung 65 und/oder eine Fokussieroptik 70 des Laserstrahls, beispielsweise in Form einer Verschiebeachse, vorgesehen. Der Motor 50 und/oder der diesem zugeordnete Drehgeber 51 zur Einstellung des Rädchenverdrehung sowie die Verschiebeeinrichtung 53 werden durch die Steuerung 52 gesteuert, um die zu strukturierenden Bereiche der Schneidenoberfläche, d.h. des die Schneidkante umfassenden Bereichs um die radiale Umfangslinie des Rädchens, gegenüber dem Laserstrahl auszurichten.

Die laterale Lage des Laserstrahls zur Hauptmittelebene 3 des Rädchens bzw. zur radialen Umfangslinie 2 wird durch einen Positionsgeber gesteuert, der auf eine Verschiebeachse 53 der Umlenkeinrichtung wirkt, um den Laserstrahl lateral zu positionieren (siehe Pfeil). Diese Positionierung kann der Umfangspositionierung des Rädchens, beispielsweise in Abhängigkeit von der Verdrehstellung des Rädchens um seine Drehachse in Bezug auf die Einstrahlrichtung des Laserstrahls, überlagert sein oder abwechselnd mit dieser erfolgen, so dass der Laserstrahl die gesamte zu strukturierende Umfangsoberfläche des Rädchens abfahren kann. Die Positionssignale des die laterale Lage des Laserstrahls erfassenden Positionsgebers 54 und des die Verdrehlage des Rädchens erfassenden Drehgebers 51, der dem Motor 50 zugeordnet ist, werden der Laseransteuerung 80 zugeleitet, die Pulsfolge des Lasers 60 steuert, um die Zahnzwischenräume 8 und die sonstigen Strukturierungen der Rädchenumfangsfläche zu erzeugen.

Es versteht sich, dass die Umfangsfläche des Rädchens auch auf andere Weise relativ zum Laserstrahl bewegt werden kann, um eine Materialabtragung ermöglichend von dem Laserstrahl abgetastet zu werden.

In Abhängigkeit von der Positionierung des Laserstrahls gegenüber dem Rädchen kann die Pulsleistung bzw. Pulsfolge des Kurzpulslasers somit moduliert werden. Die Abtragtiefe kann hierdurch im Bereich von bis zu ≤ 1/10 µm oder einigen wenigen Zehnteln µm sehr exakt gesteuert werden, so dass geometrisch sehr exakt definierte Zahnflanken aus dem Rädchengrundkörper herausgearbeitet werden können. Der Laserstrahl kann hierbei durch eine Fokussiereinrichtung auf die abzutragende Stelle des Rädchenumfangs fokussiert werden. Der Laserstrahl kann im Fokus einen Durchmesser von ≤ 30-50 µm oder ≤ 25-20 µm, vorzugsweise ≤ 15-20 µm oder ≤ 12-15 µm aufweisen, besonders bevorzugt ≤ 8-10 µm, beispielsweise im Bereich von 2-20 µm oder 5-12 µm.

Die Leistungsansteuerung des Lasers mittels der Steuerungseinrichtung 80 kann mittels einer Look-up-Tabelle erfolgen, die in Abhängigkeit von den Positionssignalen des Positionsgebers 54 und des Drehgebers 51 die Pulsfolge bestimmt, um eine für die gewünschte Strukturierung gewünschte Laserleistung auf der Rädchenumfangsfläche einzukoppeln und das Material des Rächengrundkörpers an den gewünschten Stellen in dem gewünschten Umfang zu verdampfen. Es versteht sich, dass an den von dem Laserstrahl abgetasteten Stellen, an denen eine Strukturierung nicht erwünscht ist wie z.B. an den Zahnrücken, der Laser deaktiviert bleibt, d.h. keinen Puls aussendet. Der Laserstrahl kann somit sehr exakt seitlich der radialen Umfangslinie über den Außenumfang des Rädchens bzw. über die geneigten Seitenflächen geführt werden, um hierdurch durch eine geeignete Pulsfolge den zur Ausbildung der gewünschten Zahnstrukturierung erforderlichen Materialabtrag zu erzielen. Allgemein können hierdurch auch Bereiche der Umfangsfläche des Rädchens strukturiert werden, die radial näher der Drehachse angeordnet sind als der Grund der Zahnzwischenräume in der Hauptebene 3 des Rädchens, beispielsweise seitlich von der Hauptebene weiter beabstandete Bereiche der Umfangsfläche, so dass auf einfache Weise z.B. auch die Zahnzwischenräume strukturiert oder Schneidkanten in den Zahnzwischenräume ausgebildet werden können.

Der Laserstrahl kann im Wesentlichen parallel zur Hauptebene auf die geneigten Seitenflächen des zu strukturierenden Rädchenumfang gerichtet werden, so dass der Laserstrahl in einem Winkel auf die Seitenflächen auftrifft, wobei überraschenderweise eine ausreichende oder auch praktisch nicht beeinträchtigte Energieeinkoppelung stattfindet. Diese Anordnung ist konstruktiv besonders einfach. Der Laserstrahl kann jedoch auch in einem Winkel zur Hauptebene des Rädchens auf die zu strukturierenden Seitenflächen gelenkt werden, oder auch senkrecht zu diesen, wozu eine geeignete optische Umlenkeinrichtung vorgesehen sein kann.

Figur 2 zeigt ein erfindungsgemäß hergestelltes Glasschneidrädchen 1 zum Erzeugen einer geritzten Sollbruchlinie auf einer Glasplatte mit einer den Außenumfang des Rädchens definierenden radialen Umfangslinie 2, die hier die senkrecht zu der Drehachse des Rädchens stehenden und durch den Schwerpunkt des Rädchens verlaufende Hauptmittelebene 3 des Rädchens bildet. Im Zentrum des Rädchens ist eine Ausnehmung 4 zur Einführung einer Achse vorgesehen. Das Rädchen kann einen äußeren Durchmesser von ca. 3 mm und eine Breite von ca. 0,6 mm aufweisen. Die geneigten Seitenflächen 6 konvergieren zur Hauptmittelebene 3 hin und schneiden sich in dieser. Die Umfangslinie 2 weist eine Vielzahl von Schneidzähnen 7 mit auf der Umfangslinie liegenden Schneidkanten 5 auf, die in Umfangsrichtung durch Zahnzwischenräume 8 voneinander beabstandet angeordnet sind. Das Rädchen kann aus einem vorzugsweise verschleißbeschichteten Hartmetallwerkstoff oder aus polykristallinem Diamant bestehen. Die Zahnoberflächen 7a und gegebenenfalls auch die Seitenflächen 6 des Rädchens können aufgeraut sein, beispielsweise durch einen Schleifvorgang, wobei die radiale Höhe der Schneidzähne über eine etwaige regellose Oberrauhigkeit hinaus geht. Die Oberflächenrauhigkeit Rz (nach DIN/ISO) kann ca. 1,5 µm, die Rauhigkeit Ra ca. 0,15 µm betragen. Gegebenenfalls können die Zahnoberflächen und/oder Seitenflächen auch poliert sein.

Zumindest ein Teil oder sämtliche der Zahnzwischenräume 8 sind mit einer Schneidkante 9 versehen, so dass auch die Bereiche der Zahnzwischenräume bei dem Ritzvorgang schneidend mit der Glasplatte 100 zum Angriff kommen, wie in Fig. 2g dargestellt. Die Schneidkanten der Zahnzwischenräume sind somit lateral nach innen beabstandet von den Einhüllenden der geneigten Seitenflächen des Rädchens und/oder den Seitenflächen der Schneidzähne, vorzugsweise im Bereich der Hauptmittelebene des Rädchens, angeordnet. Überraschenderweise können hierdurch Tiefenrisse sehr großer Tiefe und zugleich Bruchkanten sehr hoher Qualität und praktisch ohne seitliche Absplitterungen erzielt werden. Der Ausschuss insbesondere bei Dünnglasplatten wie z.B. für Displays kann hierdurch wesentlich verringert werden. Entsprechendes gilt auch für eine Trennung von Glaskörpern in einem sogenannten "geöffneten Schnitt", bei welchem durch den Ritzvorgang bereits eine gewisse Separation der getrennten Teile des Körpers erfolgt.

Die Schneidkanten 9 der Zahnzwischenräume und die Schneidkanten 5 der Zähne liegen in derselben Hauptebene des Rädchens, genauer gesagt der Hauptmittelebene 3, wodurch eine durchgehende und besonders schmale und geradlinige Ritzlinie unter Erzeugung eines sehr tiefen Tiefenrisses erzeugt werden kann. Die Schneidkanten 9 der Zahnzwischenräume sind somit allgemein von den Zahnflanken 7b lateral beabstandet und nach innen zur Hauptmittelebene 3 hin versetzt. Durch die Schneidkanten 9 der Zahnzwischenräume wird auch im Zwischenzahnbereich das anzuritzende Glas vorzugsweise geritzt und seitlich von dem Rädchen verdrängt, wodurch anscheinend auch die Propagation der Tiefenrisse gefördert wird.

Der eingeschlossene Flankenwinkel W2 der Zahnzwischenräume, der durch die beiden geneigten Seitenflächen 6 definiert wird, ist hierbei zumindest in etwa oder genau gleich dem Flankenwinkel W1 der Zähne auf Höhe des Zahnrückens 7c. Die die Schneidkanten ausbildenden Flanken 7b, 9b der Zähne und der Zahnzwischenräume sind hierbei zumindest im Wesentlichen eben ausgeführt. Gegebenenfalls können die Flankenwinkel W1, W2 der Zähne und Zahnzwischenräume sich jedoch voneinander unterscheiden sein, beispielsweise können die Flanken 9b der Zahnzwischenräume einen kleineren Winkel einschließen als die Zahnflanken.

Die Schneidzähne weisen hier eine Längserstreckung in Umfangsrichtung von ca. 20 µm, die Zahnzwischenräume 8 eine Umfangserstreckung von ca. 30 µm auf. Die Längserstreckung der Zahnzwischenräume ist größer als die der Zähne bzw. der Zahnrücken, das Verhältnis beträgt hier ca. 1,5. Das Verhältnis der Zahnhöhe, ausgehend von der Basis der Zahnzwischenräume, zu der Längserstreckung der Schneidkanten der Zähne beträgt hier ca. 1:3 liegen. Die Zähne und Zahnzwischenräume sind symmetrisch zu der Hauptebene 3 des Rädchens angeordnet.

Die einstückig mit dem Korpus des Rädchens verbundenen Schneidzähne sind nach dem Ausführungsbeispiel auf die geneigten Seitenflächen 6 des Rädchens "aufgesetzt" und stehen von den zu der Hauptmittelebene 3 hin konvergierenden Seitenflächen 6 des Rädchens radial nach außen vor.

Wie in Fig. 2f erkennbar ist, sind die Schneidzähne in einer in dem Rädchenumfang eingearbeiteten Rinne 18 angeordnet. Die Zahnflanken 7b können zu der Hauptebene 3 den gleichen Winkel einschließen, wie die an die Rinne 18 angrenzenden ebenfalls geneigten Seitenflächen 6a. Die Zahnseiten 7d erstrecken sich hierbei bis zum Grund der Rinne.

Gemäß Figur 2f sind die Schneidzähne 7 derart ausgeführt, dass der in Schneidrichtung vordere Bereich 21 derselben mit zunehmendem lateralen Abstand von der Hauptmittelebene 3 nach hinten zurückspringt. Der in Schneidrichtung vorderste Bereich der Schneidzähne ist als stirnseitige Schneidkante 22 ausgebildet, die hier in der Hauptmittelebene 3 liegt. Durch die Zahnrücken 7c, die stirnseitigen Schneidkanten 22 der Zähne und die Schneidkanten 9 der Zahnzwischenräume 8 wird eine durchgehende, vorzugsweise in einer Ebene liegende Schneidkante ausgebildet. Entsprechendes gilt für die in Schneidrichtung hinten liegende Stirnseite 24 der Zähne mit der Schneidkante 26, so dass der Zahn in der Draufsicht rautenförmig ist und je eine Schneidzahnecke in der Hauptmittelebene liegt. Die stirnseitigen Schneidkanten können unabhängig von der dargestellten Geometrie der Schneidzähne vorgesehen sein, wodurch ein besonders gutes Ritzbild erzeugt werden kann. Die beidseitig der Hauptebene 3 schräg angestellten Stirnseitenbereiche 27a,b der Zähne können einen Winkel W3 von ≤ 170-175° und ≥ 45-60° miteinander einschließen, vorzugsweise einen Winkel von ca. 90-160°, z.B. von 110-150°, insbesondere ca. 135° (siehe Figur 2e). Dies kann für die in Schneidrichtung vorderen und/oder hinteren Stirnseiten gelten.

Sowohl die Rinne 18 als auch die Struktur der Zähne 7 und der Zahnzwischenräume 8 mit den Schneidkanten 8 sind mittels Materialabtrag durch den gepulsten Laserstrahl mit einer Vorrichtung nach Figur 1 aus dem Rädchengrundkörpers herausgearbeitet worden. Die Zahnoberseiten 7b und/oder Schneidkanten 5 können hierbei ohne Bearbeitung durch den Laserstrahl Oberflächenbereiche des ursprünglichen Grundkörpers darstellen, dessen Umfangsfläche durch die geneigten und in der radialen Umfangslinie zusammenlaufenden Seitenflächen 6a definiert wird, sie können allgemein bei Bedarf jedoch auch durch den Laserstrahl zusätzlich strukturiert sein.

In Figur 2g ist dargestellt, wie die Zähne und die Zahnzwischenräume in den Glaskörper 100 in Form einer Glasplatte eindringen und die Glaskörperoberfläche 101 (Papierebene) durchsetzen. Sowohl die stirnseitigen Schneidkanten 22 als auch die Schneidkanten 9 der Zahnzwischenräume tauchen beim Ritzvorgang in die Glasplatte 100 ein. Die Zahnflanken 7b tauchen nur teilweise in die Glasplatte ein, so dass die Zahnseitenflächen oder hier die seitlichen Zahnkanten 28 sowie auch der Grund der Rinne 18 oberhalb der Glasplattenoberfläche verbleiben. Die Eindringtiefe T1 der Schneidkanten der Zahnzwischenräume ist kleiner als die Eindringtiefe T2 der Zähne sein, beispielsweise ≥ 5 bis 10 % oder ≥ 15 bis 20 %, vorzugsweise ≤ 50 bis 75% derselben. Ein Eindringen der Zahnzwischenraumschneidkanten ist jedoch nicht zwingend notwendig. Die Höhe der sich über die Basis der Zahnzwischenräume hinaus erstreckenden Zähne kann derart bemessen sein, dass bei der ersten Berührung eines gegebenen Zahnes mit der Glaskörperoberfläche 101 der in Schneidrichtung unmittelbar nachfolgenden Zahnzwischenraum mit seiner Basis oder mit seiner gesamten Länge noch nicht mit der Glaskörperoberfläche 101 in Kontakt kommt, was allgemein gelten kann. Das Schneidrädchen stützt sich somit an dem vorderen Ende des Eindringbereiches der Glaskörperoberfläche 101 lediglich an den Zahnrücken bzw. Schneidkanten der ersten Zähne, besonders der ersten beiden Zähne, an der Glaskörperoberfläche ab, so dass die Schneidkante des Zahnzwischenraumes erst nach dem zweiten mit dieser in Angriff kommenden Zahn oder einem weiter zurückliegenden Zahn erstmalig mit der Glaskörperoberfläche in Wechselwirkung kommt.

Figur 3 zeigt ein weiteres Ausführungsbeispiel, wobei gleiche Merkmale wie in Figur 2 mit gleichen Bezugsziffern versehen sind. Die Zähne 7 sind durch taschenartige Vertiefungen 31 in beiden der geneigten Seitenflächen 6 des Rädchens ausgebildet, die die Zahnzwischenräume 8 ausbilden. Die Schneidzähne sind hierdurch Bestandteil der geneigten Seitenflächen 6 des Rädchens, so dass die Zahnflanken 7b eine Verlängerung der Seitenflächen darstellen. Die Zahnflanken können somit die gleiche Neigung zu der Hauptebene aufweisen, wie die radial weiter aussenliegenden Seitenflächen 6. Die Flankenwinkel W1 der Zähne können auch hier zumindest in etwa oder genau den Flankenwinkeln W2 der Zahnzwischenräume entsprechen. Die beidseitig der Hauptmittelebene 3 angeordneten Vertiefungen laufen jeweils in den Schneidkanten 9 bzw. der Basis 9c der Zahnzwischenräume 8 zusammen. Der Grund 32 der Vertiefungen kann zumindest im Wesentlichen eben sein. Der Grund 32 der Vertiefungen kann zur Mitte bzw. zur Hauptmittelebene 3 des Rädchens hin ansteigen und zumindest im Wesentlichen parallel zu den Seitenflächen 6 verlaufen. Die Tiefe der Vertiefungen kann über deren Ausdehnung quer zur Hauptmittelebene 3 zumindest im Wesentlichen konstant sein. Die Schneidkanten 9 sind bei dieser Ausgestaltungsart des Rädchens lateral von den seitlichen Endbereichen der Zähne, die hier durch die Endbereiche 31a der Vertiefungen 31 definiert werden, beabstandet und in der Hauptmittelebene 3 angeordnet.

Die Seitenwände 33 sind vorzugsweise zumindest im Wesentlichen eben. Die Seitenwände 33 können zumindest im Wesentlichen senkrecht zu den geneigten Seitenflächen 6 des Rädchens und/oder zumindest im Wesentlichen parallel zu der Hauptmittelebene des Rädchens verlaufen. Der Querschnitt und/oder die Tiefe der Ausnehmungen können über eine gewisse Erstreckung derselben in lateraler Richtung des Rädchens, z.B. ≥ 25-50% der Länge derselben, oder über die gesamte Ausdehnung der Ausnehmung zumindest im Wesentlichen konstant sein. Die Ausnehmungen können ausgehend von der Hauptmittelebene in lateraler Richtung eine Ausdehnung von ≥ 10-20 µm, ≥ 25-50 µm oder ≥ 100 µm aufweisen.

Wie in Fig. 3c, rechts, beispielhaft für eine der Vertiefungen gezeigt ist, können Tiefe und/oder Querschnitt der Vertiefungen auch in Umfangsrichtung des Rädchens variieren, so kann der Grund 32 zu der Oberseite 6a der Seitenflächen hin ansteigende Bereiche 32a aufweisen, die seitlich zu den Übergangsbereichen 35 der Zahnzwischenräume angeordnet sein können. Der übergangsbereich 35 kann hierbei von der Basis 9c des Zahnzwischenraumes zum Zahnrücken 7c hin in der Höhe ansteigen, wobei der Übergangsbereich sowie auch die Basis der Zahnzwischenräume jeweils einen vorzugsweise durchgehenden Schneidbereich ausbilden. Der Übergangsbereich kann linear oder nicht-linear ansteigen. Eine derartige Ausgestaltung kann bei sämtlichen Zahnzwischenräumen des Rädchens gegeben und auch bei anderen Ausführungsbeispielen vorgesehen sein.

Wie in Figur 3f angedeutet, können die Zähne und/oder die Zahnzwischenräume zusätzliche Feinstrukturierungen 36 aufweisen, beispielsweise in Form von zusätzlichen Rippen, deren radiale Höhe und/oder Umfangbreite größer als die von etwaigen Schleifriefen sind. Es versteht sich, dass derartige Feinstrukturierungen auch bei den anderen Ausführungsformen des Rädchens vorgesehen sein können.

Sowohl die taschenförmigen Ausnehmungen 31, durch die die Struktur der Zähne 7 bestimmt wird, als auch die Schneidkanten 9 der Zahnzwischenräume sind mittels Materialabtrag durch den gepulsten Laserstrahl mit einer Vorrichtung nach Figur 1 aus dem Rädchengrundkörpers herausgearbeitet worden. Die Zahnoberseiten 7b können hierbei ohne Bearbeitung durch den Laserstrahl Oberflächenbereiche des ursprünglichen Grundkörpers darstellen, wobei die Umfangsfläche des Grundkörpers durch die geneigten und in der Hauptebene zusammenlaufenden Seitenflächen 6 definiert wird.

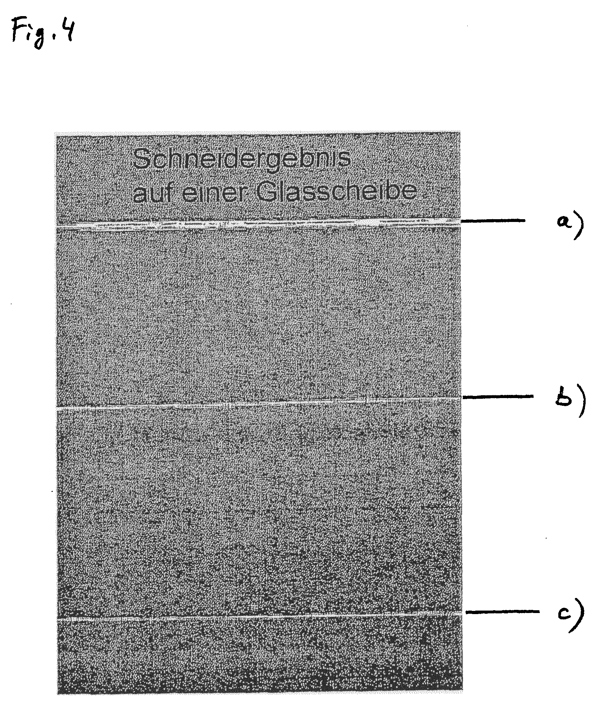

Figur 4 zeigt eine Gegenüberstellung von Ritzbildern eines herkömmlichen Schneidrädchens, bei welchem die geneigten Seitenflächen durch einen Schleifvorgang auf eine Rauhigkeit Rz von 1,5 µm aufgeraut sind (Fig. 4a), und eines Schneidrädchens nach der EP 773 194, bei welchem in der durch die geneigten Seitenflächen 6 des Rädchens ausgebildeten Rippe Vertiefungen eingebracht sind. Diese Vertiefungen können beispielsweise durch ein Schleifrad eingebracht werden, dessen Drehachse senkrecht zu der Drehachse des Glasschneidrädchens steht, oder entsprechend auch durch elektrische Entladungen. Figur 4c zeigt ein Ritzbild eines erfindungsgemäßen Schneidrädchens. Durch das erfindungsgemäße Schneidrädchen kann somit eine gleichmäßigere, schmalere und durchgehende Ritzlinie erzeugt werden, die zu einem entsprechend verbesserten Bruchbild und verbesserter Kantenqualität der getrennten Glasplattenteile führt. Die Schneidrädchenabmessungen stimmen im Übrigen miteinander überein. Die Anpreßkraft wurde jeweils so gewählt, dass die Glasplatte durch den Ritzvorgang möglichst einfach zerteilbar ist.

## Patentansprüche

1. Verfahren zum Herstellen von Schneidrädchen (1) zum Erzeugen von geritzten Sollbruchlinien, wobei das Rädchen eine Drehachse (D) und eine einen Außenumfang des Rädchens (1) definierende radiale Umfangslinie (2) aufweist, die zumindest teilweise eine Schneidkante mit einer Zahnstruktur mit voneinander beabstandeten und durch Zahnzwischenräume (8) getrennten Zähnen aufweist, wobei beidseitig der radialen Umfangslinie (2) des Rädchens (1) sich Seitenbereiche (6) erstrecken, wobei mittels eines Laserstrahls durch teilweises Abtragen des Umfangsbereichs des Rädchens im Bereich der radial äußeren Umfangslinie (2) und der seitlich angrenzenden Oberflächenbereiche des Rädchens (1) die Zahnstruktur ausgebildet wird, **dadurch gekennzeichnet, dass** der Laserstrahl im Wesentlichen parallel einer Hauptebene (3) auf die Umfangsfläche des Rädchens gerichtet und derart Material abtragend über den Außenumfang des Rädchens (1) geführt wird, um diese zu strukturieren,
- dass in zumindest einem Teil oder in sämtlichen der Zahnzwischenräumen (8) Schneidkanten (9) resultieren, die sich zumindest mit einer Richtungskomponente in einer senkrecht zur Drehachse (D) des Rädchens stehenden Hauptebene (3) erstrecken, und
- dass die Schneidkanten (9) der Zahnzwischenräume (8) zumindest in etwa in einer Ebene mit den Schneidkanten (5) der Zähne liegen, in der Weise, dass sämtliche der schneidkanten (5,9) der Zähne und der Zahnzwischenräume (8) in einem lateralen Abstand von ≤ 5µm von der die Umfangslinie (2) des Rädchens (1) umfassenden Hauptmittelebene liegen
und dass die Abtragung mittels eines Laser-Strahls eines Pikosekunden- oder Femtosekunden-Lasers (60) erfolgt.

2. Verfahren nach Anspruch 1, **dadurch gekennzeichnet, dass** das Schneidrädchen (1) mittels eines Antriebes (50) in Rotation versetzt wird und dass der Laserstrahl während der Drehung des Schneidrädchens (1) Material abtragend mit dem Außenumfang des Rädchens (1) in Wechselwirkung gebracht wird.

3. Verfahren nach Anspruch 1 oder 2, **dadurch gekennzeichnet, dass** in Abhängigkeit von der Positionierung des Laserstrahls auf dem Außenumfang des Rädchens (1) die Pulsfolge oder Pulsleistung des Kurzpulslasers moduliert wird.

4. Verfahren nach Anspruch 1, **dadurch gekennzeichnet, dass** zur Erzeugung der Zahnstruktur das Schneidrädchen mittels eines Antriebes (50) intermittierend in Rotation versetzt wird, wobei in bestimmten Zeitintervallen keine Rotation erfolgt, und wobei der Laserstrahl in den Zeitintervallen mit nicht rotierendem Schneidrädchens (1) Material abtragend mit dem Außenumfang des Rädchens (1) in Wechselwirkung gebracht wird.

5. Verfahren nach einem der Ansprüche 1 bis 4, **dadurch gekennzeichnet, dass** der Laserstrahl. Material abtragend über Zahnoberflächen zur Strukturierung derselben geführt wird.

6. Verfahren nach einem der Ansprüche 1 bis 5, **dadurch gekennzeichnet, dass** der Laserstrahl Material abtragend derart über den Außenumfang des Rädchens geführt wird,
(i) dass die Zahnzwischenräume in radialer Richtung des Rädchens eine zumindest annähernd konstante Tiefe aufweisen, und/oder
(ii) dass Zahnzwischenräum (8) gebildet werden, deren Tiefe in Richtung auf die radiale Umfangslinie des Rädchens (1) zunimmt oder abnimmt, und/oder
(iii) dass die sich seitlich der radialen Umfangslinie erstreckende Basis der Zahnzwischenräume (8) nicht linear oder nicht eben ausgeführt ist, und/oder
(iv) dass die Zähne beidseitig einer Hauptebene (3) zurückspringende Stirnseiten aufweisen.

7. Verfahren nach einem der Ansprüche 1 bis 6, **dadurch gekennzeichnet, dass** der eingeschlossene Flankenwinkel der Zahnzwischenräume zumindest im Wesentlichen gleich dem Flankenwinkel der Zähne ist.

8. Verfahren nach einem der Ansprüche 1 bis 7, **dadurch gekennzeichnet, dass** mittels des Laserstrahls beidseitig der Zahnanordnung und dieser benachbart eine rinnenartige, sich über einen Teilumfang oder Vollumfang des Rädchens (1) erstreckende Rinne in das Rädchen (1) eingearbeitet wird, oder dass die Schneidzähne der Zahnstruktur auf einem Grat, in welchem die Seitenflächen (6) des Rädchens (1) zusammenlaufen, aufgesetzt sind.

9. Verfahren nach einem der Ansprüche 1 bis 8, **dadurch gekennzeichnet, dass** der Laserstrahl derart Material abtragend über den Außenumfang der Rippe geführt wird, dass zumindest ein Teil der Zähne stirnseitig angeordnete Schneidkanten (5) aufweist, die von beidseitig der radialen Umfangslinie angeordneten Seitenflächen (6) des Rädchens beabstandet sind.

10. Verfahren nach einem der Ansprüche 1 bis 9, **dadurch gekennzeichnet, dass** der Laserstrahl auf einen Durchmesser von ≤ 50 µm fokussiert wird.

11. Verfahren nach einem der Ansprüche 1 bis 10, **dadurch gekennzeichnet, dass** das Rädchen (1) aus polykristallinem Diamant (PKD) oder aus einem Hartmetallwerkstoff besteht.

12. Verfahren nach Anspruch 11, **dadurch gekennzeichnet, dass** das aus einem Hartmetallwerkstoff bestehende Rädchen (1) mit einer Beschichtung versehen wird.

## Claims

1. Method for the production of small cutting wheels (1) for creating a carved predetermined breaking line, wherein said small cutting wheel has an axis of rotation (D) and a radial peripheral line (2) defining an outer periphery of the small wheel (1), said radial peripheral line at least partly including a cutting edge with a tooth structure that comprises teeth that are spaced from each other and are separated from each other by interdental spaces (8), wherein lateral portions (6) extend on both sides of the radial peripheral line (2) of the small wheel (1), wherein said tooth structure is formed by a partial abrasion of the peripheral portion of the small wheel in the region of the radially outer peripheral line (2) and the laterally adjacent surface portions of the small wheel (1) using a laser beam, **characterized in that** the laser beam is directed onto the peripheral surface of the small wheel subtantially parallel to a main plane (3) and is guided over the outer periphery of the small wheel (1) while abrading material for structuring said peripheral surface, in such a manner
- that cutting edges (9) are obtained as a result in at least a part of or in all said interdental spaces (8), which cutting edges extend with at least one direction component in a main plain (3) perpendicular to said axis of rotation (D), and
- that the cutting edges (9) of said interdental spaces (8) lie in one plane with the cutting edges (5) of the teeth, at least approximately, in such a manner that all cutting edges (5, 9) of the teeth and of the interdental spaces (8) are located at a distance of ≤ 5 µm from the main center plane that includes the peripheral line (2) of the small wheel,
and that the abrasion is effected using a laser beam of a picosecond or a femtosecond laser.

2. Method according to claim 1, **characterized in that** the small cutting wheel (1) is rotated by means of a driving unit (90) and that the laser beam is interacted with the outer periphery of the small wheel (1) during the rotation of said small wheel (1) while abrading material.

3. Method according to claim 1 or 2, **characterized in that** the pulse train or the pulse power of the short-pulse laser is modulated in dependence on the positioning of the laser beam on the outer periphery of the small wheel (1).

4. Method according to claim 1, **characterized in that** for producing the tooth structure, said small cutting wheel is rotated intermittently by means of a driving unit (50), wherein no rotation takes place at specified time intervals, and wherein the laser beam is interacted with the outer periphery of the small wheel (1) while abrading material at the time intervals in which the small cutting weel (1) does not rotate.

5. Method according to one of the claims 1 to 4, **characterized in that** the laser beam is guided over the tooth surfaces while abrading material, for structuring said tooth surfaces.

6. Method according to one of the claims 1 to 4, **characterized in that** the laser beam is guided over the outer periphery of the small wheel while abrading material in such a manner that
(i) the interdental spaces present a constant depth in the radial direction of the small wheel, at least approximately, and/or
(ii) there are formed interdental spaces (8) whose depth increases or decreases in the direction towards the radial peripheral line of the small wheel (1), and/or
(iii) the base of the interdental spaces (9) which extends laterally of the radial peripheral line is configured in a non-linear or non-planar manner, and/or
(iv) the teeth have set-back front faces on both sides of a main plane (3).

7. Method according to one of the claims 1 to 6, **characterized in that** the included flank angle of the interdental spaces is equal to the flank angle of the teeth, at least substantially.

8. Method according to one of the claims 1 to 7, **characterized in that** a channel-like groove that extends over a part of the periphery or over the whole periphery of the small wheel (1) is incorporated into said small wheel (1) on both sides of the tooth arrangement and adjacent the same using said laser beam, or that the cutting teeth of the tooth structure are attached to a ridge to which the lateral faces (6) of the small wheel (1) converge.

9. Method according to one of the claims 1 to 8, **characterized in that** the laser beam is guided over the outer periphery of the ridge while abrading material in such manner that at least a part of the teeth presents frontally arranged cutting edges (9) that are spaced from both lateral faces (6) of the small wheel which are arranged on both sides of the radial peripheral line.

10. Method according to one of the claims 1 to 9, **characterized in that** the laser beam is focussed on a diameter of ≤ 50 µm.

11. Method according to one of the claims 1 to 10, **characterized in that** the small wheel consists of a polycrystalline diamond (PKD) or a hard metal material.

12. Method according to one of the claims 1 to 11, **characterized in that** the small wheel (1) consisting of a hard metal material is provided with a coating.

## Revendications

1. Procédé de réalisation de roulettes de coupe (1) pour produire des lignes de rupture gravées, dans lequel la roulette comporte un axe de rotation (D) et une ligne circonférentielle radiale (2) définissant une circonférence de la roulette (1), ladite ligne circonférentielle présentant, au moins en partie, une arête de coupe avec une structure dentée comprenant des dents séparées les unes des autres par des espaces interdentaires (8), avec des parties latérales (6) s'étendant sur les deux côtés de la ligne circonférentielle radiale (2) de la roulette (1), et la structure dentée étant formée dans la zone de la ligne circonférentielle radiale extérieure (2) et dans les zones de surface latéralement adjacentes en ablatant partiellement la zone circonférentielle de la roulette par laser, **caractérisé en ce que** le laser est dirigé sur la surface circonférentielle de la roulette sensiblement parallèlement à un plan principal (3) et est guide sur la circonférence extérieure de la roulette (1) de façon à ablater du matériau de la surface circonférentielle pour structurer celle-ci,
- que des arêtes de coupe (9) sont obtenues comme résultat au moins dans une partie ou dans toutes les espaces interdentaires (9) qui s'étendent, au moins avec une composante directionnelle, dans un plan principal (3) perpendiculaire à l'axe de rotation (D) de la roulette (3), et
- que les arêtes de coupe (9) des espaces interdentaires (8) se trouvent à peut près dans un plan avec les arêtes de coupe (5) des dents, de sorte que toutes les arêtes de coupe (5, 9) des dents et des espaces interdentaires (8) se trouvent dans un intervalle latéral de ≤ 5 µm du plan central principal contenant la ligne circonférentielle (2) de la roulette (1),
et que l'ablation est effectuée par rayon laser d'un laser picoseconde ou d'un laser femtoseconde (60).

2. Procédé selon la revendication 1, **caractérisé en ce que** la roulette de coupe (1) est mise en rotation par un dispositif de commande (50) et que durant la rotation de la roulette de coupe (1), le rayon laser est mis en interaction avec la circonférence extérieure de la roulette (1) en ablatant du matériau.

3. Procédé selon la revendication 1 ou 2, **caractérisé en ce que** le train d'impulsions ou la puissance impulsionnelle du laser à impulsions courtes est modulé en fonction de la positionnement du rayon laser sur la circonférence extérieure de la roulette (1).

4. Procédé selon la revendication 1, **caractérisé en ce que** pour produire la structure dentée, la roulette de coupe est mise en rotation de manière intermittente par un dispositif de commande (50), avec aucune rotation ayant lieu à des intervalles de temps déterminés, et le rayon laser étant mis en interaction avec la circonférence extérieure de la roulette de coupe (1) pendant les intervalles de temps ladite roulette de coupe (1) se ne trouve pas en rotation.

5. Procédé selon l'une des revendications 1 à 4, **caractérisé en ce que** le rayon laser est guidé sur les surfaces dentaires en ablatant du matériau, pour structurer lesdites surfaces dentaires.

6. Procédé selon l'une des revendications 1 à 5, **caractérisé en ce que** le rayon laser est guidé sur la circonférence de la roulette en ablatant du matériau, de sorte que
(i) les espaces dentaires présentent au moins sensiblement une profondeur constante dans la direction radiale de la roulette, et/ou
(ii) il sont formées des espaces interdentaires (9) dont la profondeur augmente ou diminue dans la direction vers la ligne circonférentielle radiale de la roulette (1), et/ou
(iii) la base des espaces interdentaires (8) s'étendant latéralement par rapport à la ligne circonférentielle est non linéaire ou non plane, et/ou
(iv) les dents présentent des faces rentrantes sur les deux côtés d'un plan principal (3).

7. Procédé selon l'une des revendications 1 à 6, **caractérisé en ce que** l'angle de flanc inclus des espaces interdentaires est au moins sensiblement égal à l'angle de flanc des dents.

8. Procédé selon l'une des revendications 1 à 7, **caractérisé en ce qu'**une rainure est incorporée dans la roulette (1) sur les deux côtés de l'arrangement dentaire et adjacent à celui-ci au moyen du rayon laser, ladite rainure s'étendant sur une partie de la circonférence ou sur l'entière circonférence de la roulette (1), ou que les dents de coupe de la structure dentée sont montées sur une crête dans laquelle les faces latérales (6) de la roulette (1) convergent.

9. Procédé selon l'une des revendications 1 à 8, **caractérisé en ce que** le rayon laser est guidé sur la circonférence extérieure de la nervure en ablatant du matériau, de sorte qu'au moins une partie des dents présente des arêtes de coupe (9) disposées du côté frontal, lesdites arêtes de coupé étant écartées des faces latérales (6) de la roulette sur les deux côtés de la ligne circonférentielle radiale.

10. Procédé selon l'une des revendications 1 à 9, **caractérisé en ce que** le rayon laser est focalisé sur un diamètre de ≤ 50 µm.

11. Procédé selon l'une des revendications 1 à 10, **caractérisé en ce que** la roulette (1) consiste en un diamant polycrystallin (PKD) ou en un matériau à métal dur.

12. Procédé selon la revendication 11, c a r a c t é r i s é en ce que la roulette (1) qui consiste en un matériau à métal dur est muni d'un revêtement.
